# EUROPEAN PATENT APPLICATION

(11) **EP 3 595 141 A1**
(43) Date of publication of application: **15.01.2020**
(21) Application number: 18763286.4
(22) Date of filing: 06.03.2018
(51) Int. Cl.: H02K 5/22, H02K 3/50

(54) **POWER SUPPLY UNIT AND ROTARY ELECTRIC MACHINE**

(30) Priority: 06.03.2017 JP 2017041204
(71) Applicant: Honda Motor Co., Ltd., Tokyo 107-8556 (JP); Newfrey LLC, New Britain, CT 06053 (US)
(72) Inventor: OSUMI Yusuke, Wako-shi Saitama 351-0193 (JP); AKAZAWA Kei, Utsunomiya-shi Tochigi 321-0905 (JP); SUZUKI Masayoshi, Toyohashi-shi Aichi 441-8540 (JP)
(74) Representative: Weickmann & Weickmann PartmbB
(86) International application number: PCT/JP2018/008573
(87) International publication number: WO 2018/164122

(57) **Abstract**

A feeding unit is provided which includes; a plurality of feeding bodies, each electrically connected to a conductor constituting a coil wound for each of a plurality of phases; and a resin holding portion made of resin material and integrally connecting and holding the plurality of feeding bodies, the resin holding portion comprising an external-side protection part surrounding each feeding body and a connection part connecting two of the adjacent external-side protection parts. A thickness size of the connection part is set to the same as a thickness size of a resin of the external-side protection part.

## Description

### Technical Field

The present invention relates to a feeding unit connecting each phase coil of a rotary electric machine and the outside and a rotary electric machine having the feeding unit.

### Background Art

In rotary electric machines, a draw-out line is connected to each phase coil and power is transferred, through the draw-out line, between each phase coil and the outside.

For instance, PATENT DOCUMENT 1 discloses a configuration in which insert molding is used to integrate draw-out lines corresponding to respective phases.

### PRIOR ART

### PATENT DOCUMENT

PATENT DOCUMENT 1: Japanese Patent Application Publication No. 2015-133873

### Summary of Invention

### Technical Problem

Meanwhile, the feeding unit of PATENT DOCUMENT 1 has a problem of large thermal deformation of resin when molded, so that it is difficult to increase positional precision of terminal end portions.

In addition, thermal stress occurring when a rotary electric machine is operated may cause a crack(s) in resin portions.

The present invention has been made in light of the above points. The purpose of the present invention is to provide a feeding unit such that influences of thermal stress can be decreased.

### Solution to Problem

An aspect of the present invention provides a feeding unit comprising: a plurality of feeding bodies, each electrically connected to a conductor forming a coil wound for each of a plurality of phases; and a resin holding portion made of resin material and integrally connecting and holding the plurality of feeding bodies, the resin holding portion comprising an external-side protection part surrounding each feeding body and a connection part connecting two of the adjacent external-side protection parts, wherein a thickness size of the connection part is set to the same as a thickness size of a resin of the external-side protection part.

### Advantageous Effects of Invention

The present invention makes it possible to provide a feeding unit such that influences of thermal stress can be decreased.

### Brief Description of Drawings

FIG. 1 is a cross-sectional view illustrating a rotary electric machine according to an embodiment.
FIG. 2 is a perspective view illustrating a feeding unit according to an embodiment.
FIG. 3 is a perspective view of feeding bodies according to an embodiment when viewed from the outer circumferential side of a rotary electric machine.
FIG. 4 is a magnified view showing essential parts of the circle A in FIG. 3.
FIG. 5 is a cross-sectional view cut along line V-V of FIG. 4.
FIG. 6 is a magnified view showing essential parts of a resin holding portion according to a first other embodiment.
FIG. 7 is a magnified view showing essential parts of a resin holding portion according to a second other embodiment.
FIG. 8 is a magnified view showing essential parts of a resin holding portion according to a third other embodiment.

### Description of Embodiments

An embodiment of the present invention is described in detail with reference to the Drawings. Note that in the description, the same elements have the same reference numerals so as to avoid redundancy.

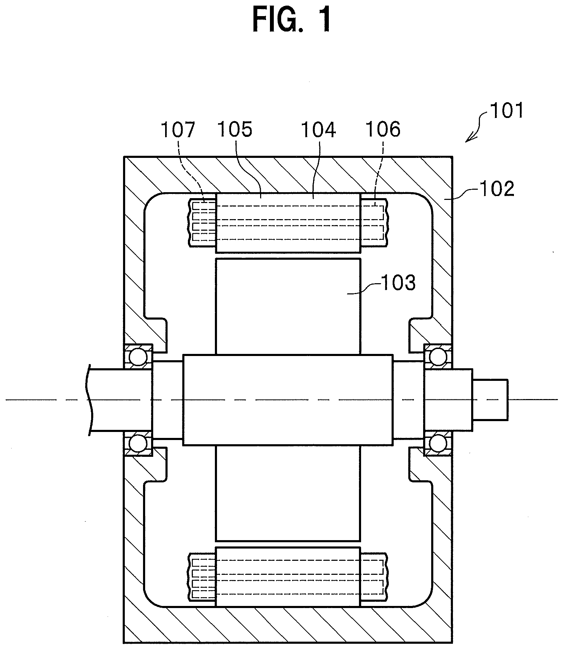

FIG. 1 is a schematic structure diagram (cross-sectional view) showing the entire structure of a rotary electric machine 101 including a feeding unit in this embodiment. The rotary electric machine 101 is mounted on a vehicle, for example, a hybrid vehicle or an electric vehicle, and functions as a driving motor when a power is supplied from outside and functions as an electric power generator in regenerative braking.

Incidentally, without being limited to the rotary electric machine 101, a feeding unit in the present invention can be also applied to a fixed motor, a motor for a different purpose, or a power generator.

Up/down in the description refers to up/down in the figure, and not up/down in a state that the rotary electric machine 101 is installed in a vehicle.

As shown in FIG. 1, the rotary electric machine 101 is provided with a casing 102, a rotor 103, and a stator 104.

The casing 102 is substantially in a cylindrical shape whose both ends are closed, and a cylindrical space is formed therein.

The rotor 103 is axially supported such as to be rotatable around the axially central portion of the casing 102.

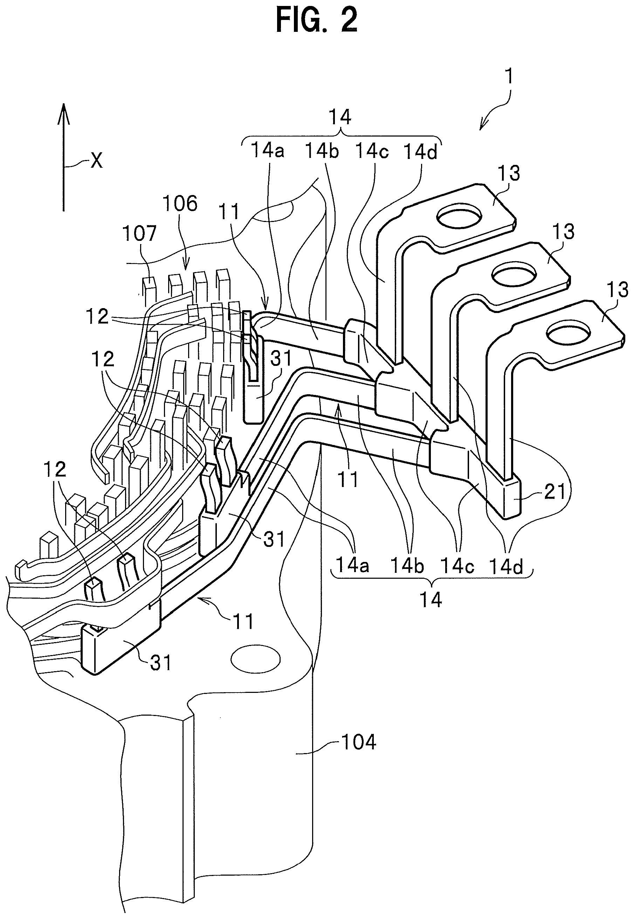

The stator 104 is, as shown in FIG. 2, in a cylindrical shape, and as shown in FIG. 1, the rotor 103 is arranged in the cylinder. The stator 104 is, as shown in FIG. 2, provided with a stator core 105 and coils 106 attached to the stator core 105.

The stator core 105 is provided with a cylindrical core main body and teeth, and is substantially in a cylindrical shape.

The core main body is fixed to the inside of the casing 102 by fitting engagement or the like

The teeth are protrusions in a pectinate shape protruding radially inward from the inner circumferential surface of the core main body at certain intervals. The gaps between teeth neighboring each other in the circumferential direction are set to be slots.

The slots penetrate thorough the stator core 105 in the axial direction, and conductors 107 forming the coils 106 are inserted therein.

The coils 106, as shown in FIG. 2, are three-phase coils formed by distribution winding of the conductors 107 for the three phases of U-phase, V-phase, and W-phase. Note that the coils 106 of the respective phases in this embodiment are formed by connecting corresponding plural segment coils 106 to each other.

The each segment coil 106 is wound around the stator core 105 while the conductor 107 is inserted in a certain slot. The segment coils 106 of the same phase are joined with each other by TIG welding, laser welding, or the like in either side in the axial direction of the stator core 105.

Incidentally, the structure of the coils 106 can be modified, as appropriate. For example, the coils 106 are not limited to the segment coils 106, and may be attached to the stator core 105 by concentration winding such as to winding coils around the teeth.

Further, on the stator 104, as shown in FIG. 2, a feeding unit 1 according to the present invention is arranged so as to electrically connect the coil 106 and an external power circuit (not shown).

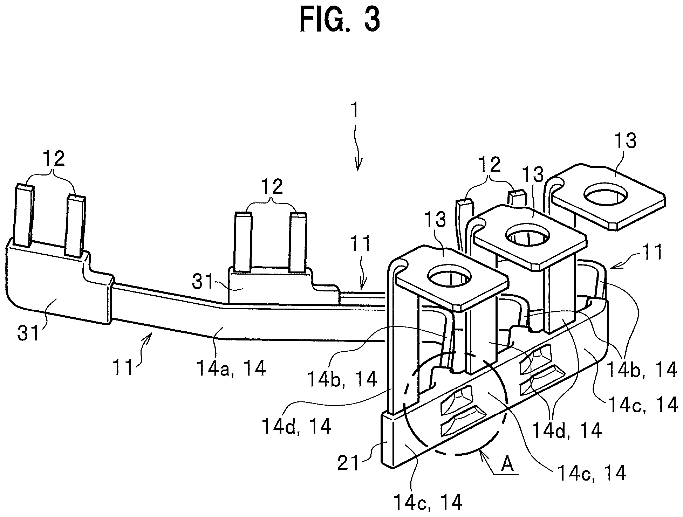

The feeding unit 1 is, as shown in FIG. 2 and FIG. 3, provided with three feeding bodies 11 corresponding to the respective phases U-phase, V-phase, and W-phase, and a resin holding portion 21 that integrally connects and holds the feeding bodies 11.

The respective feeding bodies 11 are formed by bus bars formed in a three-dimensional shape by sheet-metal processing of a conductive plate material, such as a metal (for example copper). Each feeding body 11 includes a coil-side terminal 12, an external-side terminal 13 and a feeding main body 14.

The coil-side terminals 12 are arranged along the outer circumference of the stator 104 such as to be connectable with the conductors 107 forming the coils 106 of the corresponding phase.

The external-side terminals 13 are arranged such as to be connectable with a terminal table (not shown) of an external power circuit (not shown), which is separately set outside the rotary electric machine 101.

The feeding main bodies 14 are formed in shapes which are different corresponding to the respective feeding bodies 11 such as to connect the coil-side terminals 12 connected to the coils 106 and the external-side terminals 13 connected to the terminal table, without a contact with the feeding bodies 11 of the other phases. The feeding main body 14, as shown in FIG. 3, includes a curved portion 14a, a drawn-out portion 14b, a direction-change portion 14c, and an extension portion 14d.

The each curved portion 14a is connected at the inner end thereof with the coil-side terminal 12 and disposed such as to match with the outer circumference of the stator 104.

The each drawn-out portion 14b is connected to the outer end of the curved portion 14a and extends toward radially outer side of the rotary electric machine 101. The angle of the each drawn-out portion 14b with respect to the curved portion 14a is set such that the respective drawn-out portions 14b of the three phases are located substantially at an equal distance from each other and substantially in parallel to each other.

The each direction-change portion 14c is connected at the inner end thereof with the outer end of the drawn-out portion 14b, and changes the direction thereof so that the plate surfaces of the respective bus bars of the three phases are arrayed on the same plane (see FIGS. 2 and 3).

The each extension portion 14d extends such that the direction of the plate surface of the bus bar remains the same as the direction of the plate surface of the direction-change portion 14c, and extends in the axial direction X (the upper/lower direction in FIG. 2) of the rotary electric machine 101 to connect the direction-change portion 14c and the external-side terminal 13.

Note that the feeding main body 14 is not limited to conductors composed of bus bars and can be structured using various forms of conductors. For instance, a plurality of wires with a circular cross section may be bundled to produce the feeding main body 14. Then, use of such wires can also achieve substantially the same advantageous effects as in the case of bus bars.

In addition, the connection part between the feeding main body 14 and each coil-side terminal 12, as shown in FIG. 3, is covered by a coil-side protection portion 31.

The coil-side protection portion 31 is molded, with PPS (poly phenylene sulfide) resin, on the feeding main body 14. Each of the coil-side protection portion 31 protects the connection part between the coil-side terminal 12 and the feeding main body 14 so that the feeding body 11 as a draw-out line does not accidentally contact with the stator core 105, the coil 106, or the like. For this purpose, the dimensions of the respective portions and the material of the coil-side protection portion 31 are set so that spark discharge, short, or the like is not caused by a voltage applied to the feeding body 11.

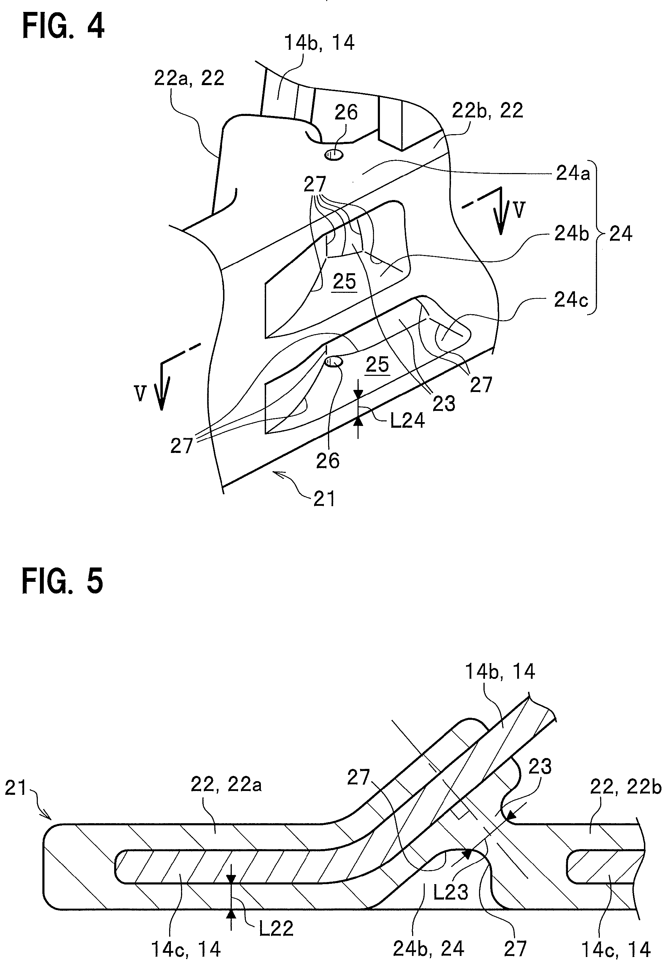

The resin holding portion 21 is molded with PPS resin. In addition, the resin holding portion 21 keeps the respective three-phase coil-side terminals 12 at positions allowing for connection with given conductors 107 and connects and holds the respective three-phase external-side terminals 13 at positions fit for their positions on a terminal table (not shown). Then, the resin holding portion 21, as shown in FIG. 4, includes each external-side protection part 22 and each connection part 23.

Each external-side protection part 22 is produced by molding so as to surround the direction-change portion 14c and both end portions thereof (a junction with the drawn-out portion 14b and a junction with the extension portion 14d).

Each connection part 23, as shown in FIG. 5, protrudes substantially perpendicular relative to a plate surface part of the drawn-out portion 14b in one external-side protection part 22a and is connected to an edge of another adjacent external-side protection part 22b. That is, the connection part 23 connects, at the shortest distance, between the drawn-out portion 14b of one of the feeding bodies and the direction-change portion 14c of another adjacent feeding body 11. In addition, the connection part 23 has the same thickness size L23 (thickness) as the thickness size L22 of the external-side protection part 22.

In addition, the connection part 23, as shown in FIG. 4, is provided with plate-shaped reinforcement ribs 24, standing on three sites at an upper edge, a lower edge, and the middle of a surface facing the terminal table, that extend from one external-side protection part 22a to another external-side protection part 22b.

Each reinforcement rib 24 has the same thickness size L24 as the thickness size L23 of the connection part 23.

In this way, the connection part 23 protrudes substantially perpendicular relative to the plate surface part of the drawn-out portion 14b, while the plate thickness is set to a prescribed size, so as to connect adjacent feeding bodies 11 as well as is provided with the reinforcement ribs 24. Consequently, a hollow space (recess) 25 facing the terminal table is created between the two adjacent external-side protection parts 22a and 22b.

In addition, as shown in FIG. 4, the reinforcement rib 24a at the upper edge and the reinforcement rib 24c at the lower edge each have a through-hole 26, which is an opening penetrating in the thickness direction.

Each through-hole 26 is an opening created at a site (where the external-side protection part 22, the connection part 23, and the corresponding reinforcement rib 24 intersect) of the corresponding reinforcement rib 24, which site is positioned at the deepest location of the hollow space 25. Then, the through-holes 26 function as discharge holes and ventilation holes.

The through-holes 26, as discharge holes, are used to discharge, from the hollow space 25 via the through-holes 26, water and/or ATF (automatic transmission fluid), etc., retained in the hollow space 25.

In addition, the through-holes 26, as ventilation holes, are used to send the air into the hollow space 25 and discharge, from an opening portion of the hollow space 25, water and/or ATF, etc., retained in the hollow space 25.

Note that each through-hole 26 is set to open at the deepest location of the hollow space 25, which location located at a base of the connection part 23. Accordingly, water and/ATF, etc., retained in the hollow space 25 can be efficiently and completely discharged.

In addition, regarding the hollow space 25, all of a corner part connecting the external-side protection part 22 and the connection part 23, a corner part connecting the connection part 23 and each reinforcement rib 24, and a corner part connecting each reinforcement rib 24 and the external-side protection part 22 are each provided with a corner R 27 that links, using a curved surface, portions of the connection. Then, the curvature radius of each corner R 27 is set to 0.3 mm or more.

Providing such corners R 27 to the portions of the connection makes it possible to relieve stress concentration at the corner portions of the hollow space 25 when molded, thereby reducing wear of a mold.

The following describes advantageous effects of the feeding unit 1 according to this embodiment.

The feeding unit 1 of this embodiment has the resin holding portion 21 that integrally connects and holds the respective three-phase feeding bodies 11. The resin holding portion 21 includes each external-side protection part 22 surrounding each feeding body 11 and each connection part 23 connecting two adjacent external-side protection parts 22 (see FIGS. 4 and 5). Then, the thickness size L23 (thickness) of the connection part 23 is set to the same as the thickness size L22 (thickness) of a resin of the external-side protection part 22.

This can decrease, when the resin holding portion 21 is molded, a difference in thermal shrinkage caused by the variation of the thickness of the resin, thereby capable of increasing positional precision of terminal end portions.

In addition, the uniform thickness of the resin can decrease thermal stress and deformation caused by heat generated when the rotary electric machine 101 is operated, thereby capable of minimizing a risk of crack occurrence.

This makes it possible to enhance resistance to thermal shock on the resin holding portion 21.

Further, the resin holding portion 21 can be molded by one molding step (can be structured by single molding). When compared to that of the structure requiring two molding steps (structured by molding twice), the number of manufacturing steps can be reduced.

This can cut manufacturing cost.

Furthermore, when the resin holding portion 21 is structured by molding twice, a crack may occur, with aging, at a parting line between the molding at the first time and the molding at the second time. Then, water may be infiltrated through this crack. Thus, it is difficult to secure insulation performance over a long period of time.

By contrast, the resin holding portion 21 of this embodiment is structured by single molding, so that no parting line occurs.

This makes it possible to secure sufficient insulation performance over a long period of time.

In addition, the feeding unit 1 of this embodiment is provided with the reinforcement ribs 24 standing on three sites at the upper edge, the middle, and the lower edge of the connection part 23 (see FIG. 4).

This can enhance rigidity of the connection part 23, thereby preventing the feeding unit 1 from being deformed when the rotary electric machine 101 vibrates.

Further, because of an increase in the rigidity of the connection part 23, no very careful attention is necessary when the feeding unit 1 is handled, so that workability can be improved.

Furthermore, the thickness of each reinforcement rib 24 is set to the same as the thickness of the connection part 23.

This can enhance the rigidity of the connection part 23 while preventing a decrease in positional precision of terminal end portions due to resin thermal shrinkage when molded while the reinforcement ribs 24 are provided.

The feeding unit 1 of this embodiment has the through-holes 26, which serve as discharge holes and ventilation holes, in the reinforcement rib 24a at the upper edge and the reinforcement rib 24c at the lower edge.

This makes it possible to rapidly discharge water and/ATF, etc., retained in the hollow space 25, thereby capable of preventing deterioration of the feeding unit 1.

Meanwhile, when ATF is retained in the hollow space 25, the volume of ATF circulating through a transmission case (not shown) decreases. Thus, there is a concern about harmful effects such as poor lubricity and insufficient cooling of the transmission.

However, providing the through-holes 26 makes it possible to rapidly discharge ATF from the hollow space 25, thereby capable of eliminating these harmful effects.

The feeding unit 1 of this embodiment is provided with corners R 27 at the corner portions of the hollow space 25 (see FIG. 4).

This configuration can relieve stress concentration on the corner portions due to heat shock at the time of molding, thereby capable of preventing wear of a mold.

Hereinabove, one embodiment of the present invention has been illustrated, in detail, by referring to the Drawings. However, the present invention is not limited to this embodiment and can be suitably modified without departing from the spirit of the present invention.

For instance, the above-described feeding unit 1 is provided with the reinforcement ribs 24 standing on three sites at the upper edge, the middle, and the lower edge of the connection part 23. However, the present invention is not limited to such a configuration. As long as the rigidity of the connection part 23 can be sufficiently secured, the number of reinforcement ribs can be reduced.

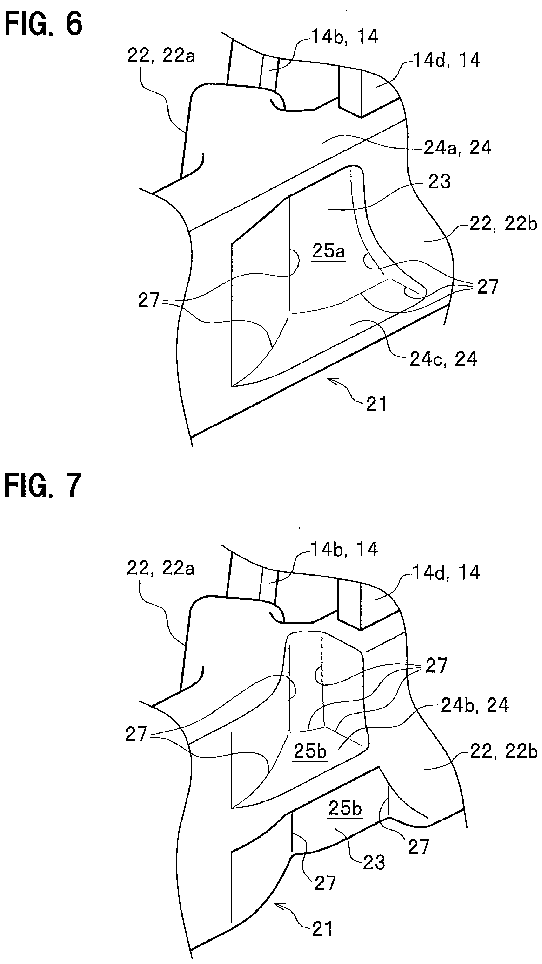

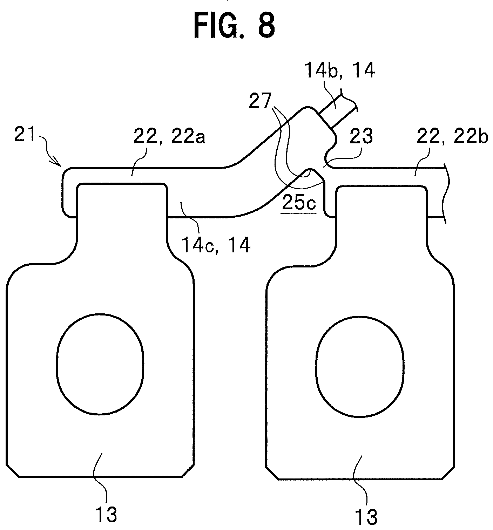

Thus, examples of various embodiments include: a first other embodiment in which reinforcement ribs 24 (24a and 24c) are provided standing on two sites at the upper edge and the lower edge of the connection part 23 (FIG. 6); a second other embodiment in which a reinforcement rib 24 (24b) is provided standing on one site at the middle of the connection part 23 (see FIG. 7); and a third other embodiment in which no reinforcement rib 24 is provided (see FIG. 8).

Note that in the first other embodiment, the reinforcement ribs 24 (24a and 24b) are provided without any through-hole. However, because the volume of the hollow space 25a is larger than that of the hollow space 25 of the above-described embodiment and the amount of water and/ATF, etc., retained in the hollow space 25a may become larger, it is desirable to provide a through-hole(s).

In addition, in the second other embodiment, the shape of the hollow space 25b is a shape in which water and/or ATF, etc., are hard to be retained, so that any through-hole is unnecessary.

Further, in the third other embodiment, neither water nor ATF is retained in the hollow space 25c, so that any through-hole is unnecessary.

In view of the above, in the second to third other embodiments, no through-hole is necessary. This makes it possible to simplify a mold, thereby capable of cutting manufacturing cost.

Note that in the above-described embodiment, the reinforcement ribs 24 stand perpendicular relative to a surface of the connection part 23. However, the present invention is not limited to such a configuration.

For instance, the draft angles of the reinforcement rib 24b at the middle and the reinforcement rib 24c at the lower edge may be increased (the base is thick and the tip is thin). In this configuration, the upward-facing surface may be inclined downward while the reinforcement ribs are provided standing perpendicular.

Such a configuration can prevent liquid retention at the hollow space portion.

### Reference Signs List

- 11: Feeding body
- 21: Resin holding portion
- 22: External-side protection part
- 23: Connection part
- 24: Reinforcement rib
- 26: Through-hole
- 27: Corner R
- 106: Coil
- 107: Conductor
- L22: Thickness size of external-side protection part 22
- L23: Thickness size of connection part 23

## Claims

1. A feeding unit comprising:
a plurality of feeding bodies, each electrically connected to a conductor forming a coil wound for each of a plurality of phases; and
a resin holding portion made of resin material and integrally connecting and holding the plurality of feeding bodies,
the resin holding portion comprising an external-side protection part surrounding each feeding body and a connection part connecting two of the adjacent external-side protection parts, wherein
a thickness size of the connection part is set to the same as a thickness size of a resin of the external-side protection part.

2. The feeding unit according to claim 1, wherein a surface of the connection part is provided with a plate-shaped reinforcement rib standing and extending so as to connect two of the adjacent external-side protection parts.

3. The feeding unit according to claim 2, wherein the reinforcement rib has a through-hole penetrating in a thickness direction thereof.

4. The feeding unit according to claim 2 or 3, wherein at least one of a corner part connecting the external-side protection part and the connection part, a corner part connecting the connection part and the reinforcement rib, and a corner part connecting the reinforcement rib and the external-side protection part has a corner R that links, using a curved surface, portions of the connection.

5. A rotary electric machine comprising the feeding unit according to any one of claims 1 to 4.
